(19) Europäisches Patentamt
European Patent Office
Office européen des brevets

(11) Publication number: 0 131 359
A1

# (12) EUROPEAN PATENT APPLICATION

(21) Application number: 84303408.3

(22) Date of filing: 18.05.84

(51) Int. Cl.[4]: C 08 F 10/00
C 08 F 4/62

(30) Priority: 15.06.83 GB 8316325

(43) Date of publication of application: 16.01.85 Bulletin 85/3

(84) Designated Contracting States: AT BE CH DE FR GB IT LI NL SE

(71) Applicant: IMPERIAL CHEMICAL INDUSTRIES PLC
Imperial Chemical House Millbank
London SW1P 3JF(GB)

(72) Inventor: Kiff, Frank Thomas
113 Guisborough Road Nunthorpe
Middlesbrough Cleveland TS7 OJD(GB)

(74) Representative: James, David Gomer et al,
Imperial Chemical Industries PLC Legal Department: Patents Po Box 6
Welwyn Garden City Herts, AL7 1HD(GB)

## (54) Catalyst component production and use.

(57) A catalyst component is prepared by treating a magnesium halide with a Lewis Base compound and a transition metal compound and subjecting the treated product to at least one washing step using a halogenated ethylene, for example tetrachloroethlene, at a temperature of greater than 80°C. The transition metal compound can be titanium tetrachloride and the Lewis Base compound an ester of an aromatic carboxylic acid, for example ethyl benzoate or di-isobutyl phthalate. The treatment can be effected in the presence of a non-metallic halide such as thionyl chloride. The treatment can be effected using a milling process. The product can be used for the polymerisation of olefin monomers such as propylene.

EP 0 131 359 A1

0137359

CATALYST COMPONENT PRODUCTION AND USE

The present invention relates to the production of a composition which includes a transition metal and which can be used as a catalyst component, catalyst systems containing such compositions and the use of such catalyst systems to polymerise unsaturated monomers, particularly olefin monomers such as ethylene and propylene.

In recent years, considerable effort has been directed to the production of polymerisation catalysts which are of such high activity that there is no need to remove catalyst residues from the polymer at the end of the polymerisation. For the polymerisation of propylene and the higher olefin monomers it is also necessary that the catalyst system should be stereospecific. Considerable effort has been directed to producing catalysts which combine high activity with good stereospecificity and catalysts have been developed which are capable of giving high yields of propylene polymers which are more than 90% insoluble in boiling heptane. Furthermore, the improvements in the catalyst system have made it possible to modify the polymerisation technique used. In particular, the polymerisation technique may be simplified to avoid the steps of post-treating the polymer product, which post-treatment has been necessary hitherto. To simplify the process even further, processes are now being used in which the polymerisation is carried out in the absence of any substantial quantity of inert hydrocarbon liquids in contrast to many prior art processes in which inert hydrocarbon liquids are as the suspension medium for the polymerisation process. In one technique, which avoids the use of any substantial quantity of inert hydrocarbon liquids, polymerisation is effected by using the monomer in the gaseous state and by contacting this gaseous monomer with growing polymer particles which contain active polymerisation catalyst.

Using such a technique, the whole polymer product is recovered without separating any atactic polymer which may be formed. Hence, for use in such a process, it is necessary that the catalyst system should be particularly stereospecific. Catalyst systems disclosed in the art, for example in British patent specifications 1 540 323 and 1 559 194, have high activity and good stereospecificity. However, the procedures used to produce the systems of GB 1 540 323 and GB 1 559 194 include a stage in which an intermediate product is treated with a transition metal compound, typically by suspending the intermediate product in undiluted liquid titanium tetrachloride. Using such a procedure, it is necessary either to carry out an expensive procedure to recover unreacted titanium tetrachloride or to dispose of the titanium tetrachloride in an environmentally acceptable manner.

In an alternative procedure, all of the reagents are milled together. To obtain a catalyst system having satisfactory characteristics it is desirable to wash the milled product. We have found that the catalyst system can be improved by using specified washing conditions.

According to the present invention there is provided a process for the production of a catalyst component which process comprises treating a magnesium halide with a Lewis Base compound and a compound of a transition metal of Groups IVA to VIA of the Periodic Table and subjecting the treated product to at least one washing step using a halogenated ethylene compound containing at least two halogen atoms at a temperature of greater than 80°C.

The treatment can be effected in the additional presence of at least one compound of the formula

$$AO_aX_{(b-2a)}$$

wherein

A is a carbon or sulphur atom;

X is a halogen atom;

a has a value of 1 or 2 and 2a has a value which is less than the valency of A; and

b is equal to the valency of A.

The magnesium halide present in the composition of the present invention is preferably a magnesium chloride. The magnesium halide may include other metal compounds, such as alkali metal or alkaline earth metal halides, and may also include metal oxides, including magnesium oxide. If other metal compounds are present, it is preferred that the proportion of such other metal compounds does not exceed 10% by weight relative to the magnesium halide. Depending on the method of preparing the magnesium halide, it may contain organic residues such as alkoxy or alkyl groups, but the amount of such organic residues preferably does not exceed 25%, on a molar basis, of the anions (which term is used herein to exclude the organic residues) such as halogen and oxygen, which are present in the magnesium halide. The magnesium halide can be essentially a magnesium dihalide. It is preferred to use an essentially anhydrous magnesium halide, typically one having a water content of not more than 2%, and especially not more than 1%, by weight.

The magnesium halide may be obtained by any suitable procedure and is conveniently a commercially available material. The magnesium halide may be produced under anhydrous conditions, for example by reacting an organic magnesium compound with a halogenating agent. The reaction of an organic magnesium compound with a halogenating agent may be effected in the presence or absence of the Lewis Base compound, the compound of a transition metal of Groups IVA to VIA of the Periodic Table (hereafter simply "transition metal compound") and the optional compound of the formula

$$AO_aX_{(b-2a)}$$

If the magnesium halide is prepared from an organic magnesium compound, a suitable organic magnesium compound has the general formula

$$YMgZ$$

where

Y is a hydrogen atom, a group R, a group OR or a halogen atom;

Z is a group R or a group OR; and

R is a hydrocarbon radical.

The organic magnesium compound may be used as a mixture, or complex, with an organic compound of a non-transition metal of Group IA or Group IIIA, for example with an aluminium trialkyl compound, but in such a mixture or complex it is preferred that the organic magnesium compound is the major component and is present in an amount of at least 50%, preferably more than 80%, by weight.

It is preferred that the organic magnesium compound is a magnesium dihydrocarbon such as di-n-butyl magnesium or n-butyl ethyl magnesium. It is also preferred that the organic magnesium compound is soluble in inert liquid hydrocarbons.

The halogenating agent may be a halide of a transition metal of Groups IVA to VIA of the Periodic Table but this is not preferred. The halogenating agent is preferably a chlorinating agent. Suitable halogenating agents include hydrogen halides such as hydrogen chloride, silicon halides, carboxylic acid halides, halocarbons or halohydrocarbons, phosphorus pentachloride, thionyl chloride, sulphuryl chloride, chlorine and bromine.

The silicon halides include silicon tetrachloride, silicon tetrabromide and halosilanes such as

trichlorosilane, trimethyl silicon monochloride, diethyl silicon dichloride and monobutyl silicon trichloride.

The carboxylic acid halides include acetyl chloride, benzoyl chloride, 4-methylbenzoyl chloride and 4-methoxybenzoyl chloride.

The halocarbons and halohydrocarbons include carbon tetrachloride, chloroform, ethyl chloride, ethylene dichloride and 1,1,1-trichloroethane.

The quantity of the halogenating agent is conveniently sufficient to provide at least 0.1, and especially at least 1.0, halogen atom for every organic group, for example R or OR, present in the organic magnesium compound. The process can be effected at ambient temperature or at an elevated temperature of up to 100°C. The preferred temperature is dependent on the particular halogenating agent used, for example, using carbon tetrachloride, the temperature is typically at least 60°C.

The process may be carried out by adding the Lewis Base compound to a solution of the organic magnesium compound, then adding the halogenating agent and agitating the reaction mixture, at an elevated temperature if desired. The reaction is conveniently effected for a time of at least 0.25 up to 10 hours, preferably from one up to 5 hours. The reaction with the halogenating agent produces a solid magnesium halide material as a reaction product. This reaction product is conveniently separated from the reaction medium and washed several times. The reaction product may contain the Lewis Base compound and/or the transition metal compound. However, the reaction product may contain neither the Lewis Base compound nor the transition metal compound. Such a reaction product is then subjected to a reaction with whichever of the Lewis Base compound and/or the transition metal compound

which is absent from the reaction product. This reaction may be effected at ambient temperature or at an elevated temperature, for example up to 100°C by suspending the reaction product in a solution of the Lewis Base compound and/or the transition metal compound. Reaction is effected by stirring the suspension for a suitable period of time, for example from 5 minutes up to 10 hours at the desired temperature.

The process of this aspect of the present invention may be carried out by adding a Lewis Base compound, for example an ester such as ethyl benzoate, to a solution of a magnesium dialkyl compound, adding to the mixed solution, at a temperature of at least 60°C, a halogenating agent such as carbon tetrachloride, separating and washing a solid reaction product, treating this solid reaction product with a transition metal compound and then washing with a halogenated ethylene compound at a temperature greater than 80°C.

The Lewis Base compound (by which is meant a compound which is a Lewis Base) is preferably an ester. A wide range of esters has been proposed for use in the production of catalyst components and many of these can be used in the process of the present invention. Preferred esters are mono- or poly-esters of saturated or unsaturated polycarboxylic acids (which term is used herein to include dicarboxylic acids) or esters of aromatic carboxylic acids (the term "aromatic carboxylic acid" is used herein for those carboxylic acids which include an aromatic group, which need not be linked directly the carboxylic acid group). Examples of esters which may be used in the process of the present invention include methyl benzoate, methyl 4-methylbenzoate, ethyl benzoate, ethyl 4-methoxybenzoate, diethyl phthalate, di-isobutyl phthalate, di-isobutyl maleate and diethyl-2,3-naphthalene-dicarboxylate.

The transition metal compound is preferably a halide, particularly a chloride. The transition metal is preferably a metal of Group IVA and is especially titanium. Particularly useful catalyst components have been obtained using titanium tetrachloride as the transition metal compound.

For convenience hereafter, the optional compound of the formula

$$AO_aX_{(b-2a)}$$

will be referred to as the "non-metallic halide". The element A is preferably sulphur. The value of a in the non-metallic halide is preferably one. The halogen atom is conveniently chlorine. We prefer to use thionyl chloride ($SOCl_2$) as the non-metallic halide.

In the process of the present invention, the Lewis Base compound is preferably used in an amount of not more than one mole for each mole of the magnesium halide. It is preferred to use at least 0.02 moles of the Lewis Base compound for each mole of the magnesium halide. In general the amount of the Lewis Base compound should not exceed 0.5 moles for each mole of the magnesium halide. We especially prefer to use for 0.04 up to 0.2 moles of the Lewis Base compound for each mole of the magnesium halide.

The transition metal compound can be used in the same proportions as can be used for the Lewis Base compound. Whilst it is not essential to the process of the present invention, it is convenient to use the transition metal compound and the Lewis Base compound in the same molar proportions relative to the magnesium halide.

The optional non-metallic halide is conveniently used in an amount of at least 0.1% up to 50% by weight relative to the magnesium halide, particularly in an amount of at least 0.2% up to 25% by weight, and especially in an

amount of at least 0.5% up to 15% by weight relative to the magnesium halide.

The magnesium halide may be treated with the Lewis Base compound, the transition metal compound and, if desired, the optional non-metallic halide, using any suitable technique. A convenient technique for effecting the treatment is by grinding together the magnesium halide and the desired proportions of the Lewis Base compound, the transition metal compound and the optional non-metallic halide. However, if the magnesium halide has been obtained by the reaction of an organic magnesium compound and a halogenating agent, it is preferred that the treatment with the Lewis Base compound, the transition metal compound and the optional non-metallic halide is effected by suspending the magnesium halide in a liquid medium containing the other reagents.

If the treatment is effected by grinding any suitable grinding apparatus may be used such as, for example, a rotating ball mill or a vibrating ball mill. The grinding is preferably carried out in the substantial absence of oxygen and/or moisture.

The grinding conditions will be dependent on the grinding technique and on the nature of the materials being ground. It is generally preferred to carry out the grinding for a period of from 1 hour up to 5 days particularly from 5 up to 80 hours. Any suitable temperature may be used for the grinding, for example, from -50°C up to 100°C, especially from -10°C up to 80°C, and, if desired, different temperatures may be used during various stages of the grinding operation. The grinding may be carried out without applying heating or cooling to the pulverising apparatus. However, the conditions of grinding are generally such that heat is generated during the grinding and hence, in order to operate at an essentially constant temperature it may be necessary to apply cooling to the grinding apparatus. The

need for cooling, or heating, will be dependent on the mill size and the milling conditions.

The intensity of grinding will be dependent upon the type of grinding apparatus which is being used. Using a rotating ball mill, it is preferred that the mill is rotated at between 50% and 90% of the critical speed. By critical speed is meant the speed at which particles and balls are held by centrifugal force against the walls of the mill and do not tumble. Using a vibration mill, the mill is preferably operated to give an acceleration of between 12 and 200 metres per $sec^2$. Since the vibration mill gives a more intensive grinding using such a mill a shorter time of grinding is possible than when a rotating ball mill is used.

If the optional non-metallic halide is used, it is preferred that the magnesium halide is ground in the presence of only the non-metallic halide for from 30 minutes up to 30 hours before a further component is added.

It is preferred to add the Lewis Base compound to the magnesium halide either before, or at essentially the same time as, the transition metal compound is added. If the Lewis Base compound is added before the transition metal compound, grinding is effected for a time of typically at least 5 hours up to 30 hours before the transition metal compound is added, and milling is continued for a further period which is typically 5 to 30 hours.

If the Lewis Base compound is added at essentially the same time as the transition metal compound, the Lewis Base compound may be added first and ground with the magnesium halide for a short period, typically not more than 30 minutes, before adding the transition metal compound. Alternatively, the Lewis Base compound and the transition metal compound can be added as a complex or a mixture, although it should be appreciated that the act of mixing may result in the formation of a complex.

If a grinding process is used, although it is possible for the Lewis Base compound, the transition metal compound and the optional non-metallic halide to be added to the magnesium halide as a solution or suspension in a suitable inert liquid medium, it is preferred to make the additions without mixing the additives with an inert liquid medium.

The grinding is preferably effected in the essential absence of any inert liquid medium, but it will be appreciated that the Lewis Base compound, the transition metal compound and the optional non-metallic halide may be liquids under the conditions.

If desired, the last stage of the grinding can be effected in the presence of a liquid medium, which may be the halogenated ethylene compound to be used in the washing step, and the ground product can be recovered from the grinding apparatus as a suspension in the liquid medium. However, this is not a preferred procedure since it is liable to produce a fine suspension of the solid material and such a fine solid may be difficult to handle in subsequent stages.

The washing step with the halogenated ethylene compound may be effected in the grinding apparatus but we generally prefer to effect the washing in a vessel other than the grinding apparatus. The washing step can be effected by suspending the treated product in the halogenated ethylene compound at ambient temperature, heating the mixture to a temperature of greater than 80°C and maintaining the mixture at the elevated temperature for a period of time which is conveniently 0.25 hours up to 5 hours, for example one hour. An improved product is obtained if washing is effected at a temperature of at least 85°C, preferably at least 100°C. After washing with the halogenated ethylene compound, the washed solid is separated from the liquid by any suitable technique, for example decantation or preferably filtration.

The halogen present in the halogenated ethylene compound is preferably chlorine. The halogenated ethylene compound preferably contains four halogen atoms and the particularly preferred compound is tetrachloroethylene. The halogenated ethylene compounds used for washing in accordance with the present invention have a lower toxicity than materials such as 1,2-dichloro-ethane which have been disclosed for this purpose.

It is preferred to use only a single washing step with the halogenated ethylene compound. After the washing step using the halogenated ethylene compound, it is preferred to effect at least one further washing step using an aliphatic hydrocarbon such as hexane, heptane or a mixture of aliphatic hydrocarbons. The further washing step, or steps, can be effected in the manner described for the washing step using the halogenated ethylene compound. However, satisfactory washing may be achieved by suspending the solid in the aliphatic hydrocarbon and agitating the mixture, without heating, for a period of at least 5 up to 30 minutes.

In effecting the washing steps, at least one $cm^3$ of the washing liquid should be used for each gramme of the solid material and it is preferred to use from 5 up to 20, for example about 10, $cm^3$ of the washing liquid for each gramme of the solid material.

The ground and washed solid product contains a transition metal compound and is suitable for use as a component of an olefin polymerisation catalyst and may be used as such with no further treatment. Alternatively, the solid may be subjected to a further treatment, in particular a treatment to improve the particle form of the solid.

The particle form of the solid product may be improved by suspending the solid product in an inert liquid medium, spray-drying the suspension formed and

collecting a spray-dried solid material. The solid product is the ground product or very preferably, the ground and washed product.

Thus, as a further aspect of the present invention, the ground and washed solid product is subjected to a spray-drying step.

The spray-drying step can be effected using conventional spray-drying techniques. To effect spray-drying, the suspension is passed through a suitable atomizer which creates a spray or dispersion of droplets of the suspension, a stream of a hot gas is arranged to contact the droplets and cause evaporation of the liquid medium and a solid product separates and is collected. Suitable atomizers for producing the droplets of the suspension include nozzle atomizers and spinning disc atomizers. The inert liquid medium used for the spray-drying may be any liquid medium which does not have a deleterious effect on the characteristics of an olefin polymerisation catalyst system which incorporates the spray dried material. Typically the inert liquid medium is a liquid hydrocarbon such as an aliphatic, aromatic or cycloaliphatic hydrocarbon or a halohydrocarbon such as chlorobenzene.

The product obtained by including a spray-drying stage in the process of the present invention typically contains a reduced proportion of fine particulate material and has a particle form which is generally spherical and hence is particularly suitable for effecting polymerisation in the gas phase.

Spray-drying of suspensions which include a transition metal compound is the subject of our European Patent Application Publication No. 0 037 182.

The ground and washed solid product obtained by the process of the present invention typically includes not only fine particles but also some coarser particles having

 

a particle size which exceeds 50 microns. The presence of such coarser particles may cause blocking of a spray-drying apparatus or may result in the spray-dried material containing such coarser particles which have been essentially unaffected by the spray-drying and have an undesirable particle size and/or shape.

As a preliminary stage before spray-drying, a suspension of the solid in a liquid medium may be subjected to mechanical action to cause a reduction in the particle size of the solid material, for example using a ball mill or a device which is suitable for the production of a liquid-liquid emulsion, as is described in more detail in our copending European Patent Application Publication No. 0 072 128. Suitable devices for the production of a liquid-liquid emulsion which can be used are stirrers of the Ultra Turrax type (available from Janke and Kunkel KG IKA Werke) and high shear mixers such as are available from Silverson Machines Limited of Chesham, Buckinghamshire, England.

If a spray-drying step is included, the spray-dried solid is an agglomerate of smaller particles. In general, in using the spray-dried solid it will be subjected to shearing forces due to agitation or being circulated through pipe-work, and these shearing forces may cause at least some break-down of the spray-dried solid to smaller particles. To minimise such break-down it is preferred to incorporate into the spray-dried solid a material which renders the spray-dried solid more resistant to attrition and which may also assist in the agglomeration of the solid particles during the spray-drying step. For convenience hereafter, such a material will be referred to as an "attrition inhibitor".

The attrition inhibitor is conveniently present during the spray-drying stage and is typically present as a solution in the inert liquid medium in which the solid

is suspended. The attrition inhibitor should be such that, or should be used in an amount such that, it does not have an appreciable adverse effect on the activity and stereospecificity of an olefin polymerisation catalyst system which includes a solid material obtained by including a spray-drying step in the process of the present invention. If the material obtained by the use of a spray-drying step is subsequently to be suspended in a liquid medium, the attrition inhibitor preferably should be such as to at least minimise dispersion of the spray-dried solid material into smaller particles in the presence of the liquid medium in which the solid is to be suspended. Hence, the attrition inhibitor is preferably soluble in the liquid medium used for the spray-drying step but is insoluble, or of low solubility, in any liquid medium in which the solid is suspended after effecting the spray-drying step.

The attrition inhibitor may be, for example, polystyrene, polymethylmethacrylate, polyvinylacetate, atactic polypropylene, or an AB block copolymer for example of t-butylstyrene-styrene. It will be appreciated that not all attrition inhibitors will be equally effective. The use of an attrition inhibitor during the spray-drying of the suspension can result in the spray-dried solid material being in the form of firmer agglomerates than a similar spray-dried solid material obtained without using an attrition inhibitor. The amount of the attrition inhibitor is preferably from 0.5% up to 10% by weight relative to the solid material present in the suspension. The suspension containing the attrition inhibitor is spray-dried using conventional spray-drying techniques, for example such as are described in our European Patent Application Publication No. 0 037 182.

We have found that the product obtained by the process of the present invention, with or without the

spray-drying step, may be used in combination with organic metal compounds, and preferably Lewis Base compounds, to give a polymerisation catalyst which is suitable for the polymerisation of olefin monomers.

According to a further aspect of the present invention there is provided a polymerisation catalyst which comprises

A. A ground and washed solid product produced by a process as hereinbefore described; and

B. An organic compound of aluminium or of a non-transition metal of Group IIA of the Periodic Table, or a complex of an organic compound of a non-transition metal of Group IA or IIA of the Periodic Table together with an organic aluminium compound.

Component A of the catalyst system contains a transition metal compound and, in particular, contains a titanium chloride.

Component B of the catalyst system may be an organic magnesium compound or a mixture or complex thereof with an organic aluminium compound. Alternatively, a complex of a metal of Group IA with an organic aluminium compound may be used, for example, a compound of the type lithium aluminium tetraalkyl. However, it is preferred to use an organic aluminium compound and in particular it is preferred to use a tri-hydrocarbyl aluminium compound such as an aluminium trialkyl compound, particularly one in which the alkyl group contains from 1 up to 10 carbon atoms, for example, aluminium triethyl, aluminium tri-isobutyl or aluminium trioctyl.

In addition to Components A and B, it is preferred that the catalyst system includes a Lewis Base compound.

The Lewis Base compound which is used as an additional catalyst component can be any organic Lewis Base compound which has been proposed for use in a Ziegler polymerisation catalyst and which affects either the

activity or stereospecificity of such a catalyst system. Thus, the Lewis Base compound may be an ether, an ester, a ketone, an alcohol, an ortho-ester, a sulphide (a thioether), an ester of a thiocarboxylic acid (a thioester), a thioketone, a thiol, a sulphone a sulphonamide, a fused ring compound containing a heterocyclic sulphur atom, an organic silicon compound such as a silane or siloxane, an amine, a urea, substituted ureas, thiourea, amines and derivatives thereof, and organic phosphorus compounds. The use of organic Lewis Base compounds has been disclosed, inter alia, in British patent specifications 803 198, 809 717, 880 998, 896 509, 920 118, 921 954, 933 236, 940 125, 966 025, 969 074, 971 248, 1 013 363, 1 017 977, 1 049 723, 1 122 010, 1 150 845, 1 208 815, 1 234 657, 1 324 173, 1 359 328, 1 383 207, 1 387 890, 1 423 658, 1 423 659, 1 423 660, 1 495 031, 1 527 736, 1 554 574 and 1 559 194.

The Lewis Base compound may be an ester, for example an ester of the formula $R^1COOR^2$ wherein

$R^1$ is a hydrocarbon radical which may be substituted with one or more halogen atoms and/or oxyhydrocarbon groups; and

$R^2$ is a hydrocarbon radical which may be substituted by one or more halogen atoms.

Of these esters, it is particularly preferred to use an alkyl ester of a carboxylic acid containing an aromatic group such as, for example ethyl benzoate, butyl benzoate, methyl 4-methylbenzoate, ethyl 4-methoxybenzoate and ethyl phenylacetate. Other esters which may be used include the mono- or poly-esters of saturated or unsaturated polycarboxylic acids.

Alternative Lewis Base compounds, the use of which is preferred, are silicon compounds, particularly those containing one or more $Si-OR^3$, $Si-OCOR^3$ or $Si-NR^3$ bonds, where $R^3$ is a hydrocarbyl group. Silicon

compounds which may be used include phenyltriethoxysilane, diphenyl-diethoxysilane and n-butyltriethoxysilane.

In the polymerisation catalyst it is preferred to use at least one mole of the organic metal compound which is Component B for each mole of transition metal which is present in Component A of the catalyst system. It is particularly preferred to use at least 10 moles of the organic metal compound for each mole of the transition metal, but the proportion of Component B preferably does not exceed 250 moles per mole of transition metal in Component A. Especially preferred proportions of Component B are from 10 up to 80 moles of the organic metal compound for each mole of transition metal.

The preferred catalyst systems also include a Lewis Base compound and the proportion of Lewis Base compound should not exceed the proportion of Component B of the catalyst system. When the Lewis Base compound is an ester, we prefer to use from 0.1 up to 0.5 moles, especially from 0.25 up to 0.4 moles, of the ester for each mole of Component B. In the preferred catalyst system, the Lewis Base compound is a silicon compound and it is preferred to use 0.02 up to 0.2, for example 0.1, moles of the silicon compound for each mole of component B.

The catalyst system of the present invention may be obtained by pre-mixing Components A, B and the optional Lewis Base compound before introducing the catalyst system into the polymerisation reactor. Alternatively, all the catalyst components may be introduced separately into the polymerisation reactor. A further alternative procedure is to add Component A of the catalyst system separately and to add Component B and the Lewis Base compound as a mixture. As disclosed in our co-pending British Patent Application Publication No. 2103626, when Component B is an aluminium trialkyl and the Lewis Base compound is an

ester of an aromatic carboxylic acid if Component B and the ester are premixed, it is desirable to prepare and to store the mixture in the presence of an olefin monomer. However, if the Lewis Base compound is a silicon compound, satisfactory results are obtained if Component B and the silicon compound are mixed the absence of an olefin monomer.

The catalyst systems of the present invention are suitable for the polymerisation or copolymerisation of unsaturated monomers, particularly ethylenically unsaturated hydrocarbon monomers such as the alpha-olefin monomers.

As a further aspect of the present invention there is provided a process for the production of a polymer or copolymer of an unsaturated monomer wherein at least one unsaturated hydrocarbon monomer is contacted under polymerisation conditions with a polymerisation catalyst as hereinbefore described.

The monomer which may be used in accordance with the present invention has the formula $CH_2{=}CHR^4$ wherein $R^4$ is a hydrogen atom or a hydrocarbon radical.

Thus, the monomers which may be polymerised by the process of the present invention include ethylene, propylene, butene-1, pentene-1, hexene-1, 4-methylpentene-1, styrene, 1,3-butadiene or any other monomer having the above formula. The monomer is preferably an olefin monomer, particularly an aliphatic mono-olefin monomer which contains from 2 up to 10 carbon atoms, that is, the group $R^4$ is hydrogen or a saturated aliphatic group containing up to 8 carbon atoms.

The monomers may be homopolymerised or may be copolymerised together. If a copolymerisation is being effected this may be done using a mixture of monomers which has essentially the same composition throughout the polymerisation process. Alternatively, a sequential polymerisation process, such as described in British patents 970 478 and 970 479 may be used.

The present invention is particularly suitable for the polymerisation of ethylene or propylene, and especially for the polymerisation of propylene in the gas phase.

Thus, as a further aspect of the present invention, there is provided a process for the polymerisation of propylene which comprises contacting gaseous propylene in the substantial absence of any liquid phase with a polymerisation catalyst of the type hereinbefore described.

Using the process of the present invention, it is possible to obtain, as a direct product of polymerisation, a propylene polymer having a titanium content of less than 7 parts per million by weight, a chlorine content of less than 200 parts per million by weight and containing less than 7% by weight of polymer which is soluble in boiling heptane.

Preferred polymers have a titanium content of less than 5 parts per million by weight. In the preferred polymers the chlorine content is less than 120 parts per million by weight, especially less than 100 parts per million by weight. Propylene polymers in accordance with the invention preferably contain not more than 5% by weight of polymer which is soluble in boiling heptane. The polymer may be formed into mouldings which have a flexural modulus of at least 1.40 $GN/m^2$, especially at least 1.50 $GN/m^2$. The flexural modulus is determined from the deformation of a test strip at 1% skin strain after 60 seconds at 23°C and 50% relative humidity measured using a cantilever beam apparatus as described in "Polymer Age", March 1970, pages 57 and 58.

The low proportion of polymer which is soluble in boiling heptane and the high flexural modulus both indicate the high stereoregularity of the propylene polymers of the present invention.

 

The polymerisation process of the present invention is suitable for gas phase polymerisation, but the polymerisation can be effected in the liquid phase where the liquid phase may be an inert hydrocarbon medium or a liquid olefine monomer. If polymerisation is effected in the gas phase, the monomer may be introduced into the polymerisation vessel as a liquid under conditions of temperature and pressure within the polymerisation vessel which are such that a major proportion of the liquid monomer vaporises, to give an evaporative cooling effect, whereby the polymerisation vessel contains a solid phase which is the polymerisation catalyst and the polymer formed thereon and a gaseous monomer phase with only a minor proportion of liquid monomer.

Polymerisation in the gas phase may be effected using any technique suitable for effecting a gas-solid reaction, such as a fluidised-bed reactor system, a stirred-bed reactor system or a ribbon-blender type of reactor.

It will be appreciated that the catalyst system hereinbefore described is of the type generally known as a Ziegler-Natta type of catalyst system. As is well known, Ziegler-Natta type catalysts are susceptible to the presence of impurities in the polymerisation system. Accordingly, particularly when a high yield of polymer is desired in relation to the transition metal component of the catalyst system,, it is desirable to effect the polymerisation using reagents, that is monomer and possibly diluent, which have a high degree of purity, for example, a monomer which contains less than 5 ppm by weight of water and less than 1 ppm by weight of oxygen. Materials having a high degree of purity can be obtained by processes such as those described in British Patent Specifications 1 111 493, 1 226 659 and 1 383 611.

The polymerisation may be effected either in a batch manner or on a continuous basis and the catalyst

components may be introduced into the polymerisation vessel separately or as a mixture. When the monomer is propylene, or a higher alpha-olefin monomer, it is preferred that the catalyst contains a Lewis Base compound in addition to Components A and B.

The polymerisation can be effected in the presence of a chain transfer agent such as hydrogen or a zinc dialkyl in order to control the molecular weight of the polymer product. The proportion of chain transfer agent used will be dependent on the polymerisation conditions, the polymerisation catalyst system and on the particular monomer or monomer mixture which is being polymerised. Using hydrogen in the polymerisation of propylene, it is preferred to use hydrogen in an amount of from 0.01 up to 5.0%, particularly from 0.05 up to 2.0% molar relative to the monomer. However, when the monomer being polymerised is ethylene, or a mixture in which ethylene is a major polymerisable component (by moles), the amount of hydrogen used is typically much greater, for example, in the homopolymerisation of ethylene the reaction mixture may contain in excess of 50% molar of hydrogen, whereas if ethylene is being copolymerised, the proportion of hydrogen used is typically up to 35% molar of the total reaction mixture.

The polymerisation can be effected under any conditions which have been previously proposed for effecting the polymerisation of olefine monomers. Thus, ethylene polymerisation may be effected at pressures of up to 3000 $kg/cm^2$, and at such pressures the polymerisation temperature may be as high as 300°C. However, it is preferred to carry out the polymerisation at comparatively low pressures and temperatures, particularly for the production of polymers of the higher olefines (including propylene) which are required to have a high stereoregularity. More specifically, the polymerisation

is effected at pressures in the range from 1 up to 100 $kg/cm^2$, preferably at a pressure of up to 50 $kg/cm^2$ and especially at pressures in the range from 5 up to 40 $kg/cm^2$.

The polymerisation temperature used will be dependent in part on the particular polymerisation technique being used. Thus, it is possible to use polymerisation temperatures in excess of the melting point of the polymer and such conditions may be used in the polymerisation, or copolymerisation, of ethylene in the presence of a hydrocarbon liquid which can act as a solvent for the polymer formed. However, in general, it is preferred to use temperatures below the melting temperature of the polymer formed and in particular it is preferred to use temperatures of not more than 100°C. The polymerisation temperature is typically in the range from 40°C up to 100°C.

It is generally preferred to effect all stages in the preparation of the ground and washed solid product in an inert atmosphere which is essentially free from oxygen-containing impurities such as water vapour. Very preferably the polymerisation process of the present invention should also be effected in the absence of materials which have a harmful effect on the polymerisation process.

The optional spray-drying step can be carried out under the conditions described in more detail in our European Patent Application Publication No. 0037182.

Various aspects of the present invention will now be described with reference to the following Examples which are illustrative of the invention. In the Examples, all operations are effected under an atmosphere of essentially oxygen-and water-free nitrogen unless otherwise indicated. All the glass apparatus was dried in air oven at 120°C for at least one hour and purged with nitrogen before use.

In the propylene polymerisation examples, the propylene used for the polymerisation had been purified by passing gaseous propylene in turn through a column (7.6 cm diameter, 90 cm length) containing 1.58 mm granules of Alcoa F1 alumina at 50 to 60°C, and then through a similar column containing BTS catalyst (Cupric oxide reduced to finely divided metallic copper on a magnesium oxide support) at 40 to 50°C, condensing the issue gas and passing the liquid propylene through four columns (all 7.6 cm diameter; two of 90 cm in length, two of 1.8 m in length) at 25°C, each containing 1.58 mm pellets of Union Carbide 3A molecular sieves.

This treatment reduced the water content of the monomer from in the range of 5 to 10 ppm by volume down to $<1$ ppm by volume and the oxygen content from in the range of 1 to 2 ppm by volume down to $<0.5$ ppm by volume. The level of inert compounds (nitrogen, ethane, etc) was unchanged at 0.3% and the level of other unsaturated hydrocarbons (allene, methylacetylene etc) was unchanged at $<1$ ppm.

EXAMPLES 1 TO 3

A) Milling magnesium chloride, thionyl chloride, di-isobutyl phthalate and titanium tetrachloride

Milling was effected using a Siebtechnik SM6 Vibromill chamber having a total usable volume of about 1.5 $dm^3$ and containing 180 stainless steel balls of 25 mm diameter. The mill chamber was sealed, evauated to a pressure of 0.3 x $10^{-3}$ $kg/cm^2$ and purged with nitrogen, to give an atmosphere of nitrogen in the mill.

201 grammes of essentially anhydrous magnesium chloride (obtained from Norsk Hydro and containing about 0.5% by weight of water) and 5 $cm^3$ of thionyl chloride were added to the mill chamber and milling was then effecting, without cooling, for 6 hours by vibrating the mill assembly at a frequency of 1500 oscillations per minute and an amplitude of 2 mm.

81 $cm^3$ of di-isobutylphthalate were then added to the mill chamber and milling was effected for 24 hours whilst passing water at ambient temperature through the jacket of the mill chamber.

Titanium tetrachloride was added to the mill chamber in an amount which was equimolar relative to the di-isobutylphthalate and milling was continued under the same conditions for a further 24 hours.

At the completion of milling, the product formed was removed by inverting the mill chamber and vibrating for a further hour.

The molar proportions of magnesium chloride, di-isobutylphthalate and titanium tetrachloride added to the mill chamber were 7:1:1.

B) Washing

About 20 grammes of the product of stage A) were placed in a 250 $cm^3$ glass reaction vessel having a glass frit base and fitted with a stirrer. Between 150 and 250 $cm^3$ of a halogenated liquid were added to the reaction vessel, the halogenated liquid being added in an amount of 10 $cm^3$ of the halogenated liquid for each gramme of solid. The mixture was stirred and placed in an oil bath maintained at a desired temperature. When the mixture attained the desired temperature, stirring was continued for a further two hours and was then stopped. The liquid was filtered off and the reaction vessel was then removed from the oil bath.

The residual solid was then washed five times using 200 $cm^3$ of an isoparaffin fraction essentially all of which has a boiling point in the range 117°C to 135°C (hereafter referred to as the "isoparaffin fraction"). Each washing was effected by adding the isoparaffin fraction at ambient temperature, stirring the mixture for 15 minutes and then filtering off the liquid.

The solid was finally suspended in sufficient of the isoparaffin fraction to give a total volume of approximately 0.2 $dm^3$. Further details of the washing conditions are given in Table One.

Table One

| Example or Comp Example | Amount Solid (g) | Solvent Treatment | |
|---|---|---|---|
| | | Type (a) | Temp (°C) |
| A | 27.7 | DCE | 80 |
| B | 24.3 | TCE | 70 |
| C | 28.8 | TCEY | 80 |
| 1 | 26.0 | TCEY | 100 |
| 2 | 18.0 | TCEY | 120 |
| D | 13.6 | DCM | 40 |
| 3 | 19.1 | TRCE | 85 |

Notes to Table One

a) DCE is 1,2-dichloroethane.
TCE is 1,1,1-trichloroethane.
TCEY is tetrachloroethylene.
DCM is dichloromethane.
TRCE is trichloroethylene.

EXAMPLES 4 TO 6

The products of Examples 1 to 3 and the Comparative Examples, were used to polymerise propylene.

A two $dm^3$ polymerisation flask equipped with an efficient stirrer and a water jacket was dried carefully. One $dm^3$ of an aliphatic hydrocarbon diluent consisting essentially of dodecane isomers and having a boiling point in the range 170 to 185°C (hereafter referred to simply as the "aliphatic hydrocarbon") was introduced into the

polymerisation flask. The aliphatic hydrocarbon was evacuated at 70°C and purged with nitrogen, this procedure being effected a total of four times, which treatment effectively reduced the water and oxygen contents of the aliphatic hydrocarbon to below 10 ppm by weight. The aliphatic hydrocarbon was then saturated with the purified propylene at one atmosphere pressure, the mixture was stirred and stirring was continued throughout the following stages. 10 millimoles of tri-ethyl-aluminium were introduced as a one molar solution in the aliphatic hydrocarbon followed by one millimole of phenyltriethoxysilane as a 0.5 molar solution in the isoparaffin fraction. After five minutes, 2 $cm^3$ of the suspension obtained as described in Examples 1 to 3 or the Comparative Examples were introduced. The pressure in the reaction vessel was maintained at one atmosphere by supply of propylene from a cylinder. After a period of two hours from the introduction of the product of Examples 1 to 3 or the Comparative Examples, the run was terminated by removing the propylene and passing nitrogen into the reaction vessel. A sample of supernatant liquid was extracted for determining the concentration of soluble polymer dissolved in the polymerisation dilient. The solid was filtered and washed three times with petrol ether and dried in a vacuum oven at 120°C for an hour.

The results obtained are set out in Table Two.

Table Two

| Example or Comp Example | Ti Type (b) | Activity (c) | RPR (d) | % Soluble Polymer (e) |
|---|---|---|---|---|
| E | A | 150 | 0.6 | 0.75 |
| F | B | 60 | 0.53 | 2.8 |
| G | C | 100 | 0.57 | 2.2 |
| 4 | 1 | 120 | 0.61 | 1.1 |
| 5 | 2 | 190 | 0.68 | 0.5 |
| H | D | 200 | 0.46 | 1.6 |
| 6 | 3 | 140 | 0.61 | 1.3 |

Notes to Table Two

b) The Ti type is the product of the Example or Comparative Example identified by the number or letter respectively.

c) The activity is given in grammes of polymer formed for each millimole of titanium in the catalyst for each hour of polymerisation and each atmosphere pressure of propylene. The rate is the average rate over the two hours of polymerisation.

d) RPR is the rate profile ratio and is the ratio of the average polymerisation rate in the second hour compared to the average polymerisation rate in the first hour.

e) % soluble polymer is the proportion of the total polymer which is dissolved in the polymerisation diluent at 70°C and is given by the relationship

$$\% \text{ soluble polymer} = \frac{\text{Wt of soluble polymer} \times 100}{\text{Wt of total (solid + soluble)polymer}}$$

CLAIMS

1. A process for the production of a catalyst component which process comprises treating a magnesium halide with a Lewis Base compound and a compound of a transition metal of Groups IVA to VIA of the Periodic Table and subjecting the treated product to at least one washing step using a halogenated ethylene compound containing at least two halogen atoms at a temperature of greater than 80°C.

2. A process as claimed in claim 1 wherein the treatment is effected in the additional presence of at least one compound of the formula

$$AO_aX_{(b-2a)}$$

wherein

A is a carbon or sulphur atom;

X is a halogen atom;

a has a value of 1 or 2 and 2a has a value which is less than the valency of A; and

b is equal to the valency of A.

3. A process as claimed in claim 1 or claim 2 wherein the magnesium halide is a magnesium dihalide having a water content of not more than 2% by weight.

4. A process as claimed in claim 1 wherein the magnesium halide is a product obtained by reacting an organic magnesium compound with a halogenating agent.

5. A process as claimed in any one of claims 1 to 4 wherein the Lewis Base compound is a mono- or poly-ester of a saturated or unsaturated polycarboxylic acid or an ester of an aromatic carboxylic acid.

6. A process as claimed in any one of claims 1 to 5 wherein the compound of a transition metal is titanium tetrachloride.

7. A process as claimed in any one of claims 1 to 3, 5 and 6 wherein the treatment is effected by grinding the magnesium halide in the presence of the Lewis Base compound and the compound of a transition metal.

8. A process as claimed in any one of claims 1 to 7 wherein the halogenated ethylene compound is tetrachloroethylene.

9. A process as claimed in any one of claims 1 to 8 wherein the washing step is effected at a temperature of at least 100°C.

10. A process as claimed in any one of claims 1 to 9 wherein the at least one washing step is effected using from 5 up to 20 $cm^3$ of the washing liquid for each gramme of solid material.

11. A process as claimed in any one of claims 1 to 11 wherein the treated and washed material is suspended in an inert liquid medium, the suspension is spray-dried and a spray-dried solid material is collected.

12. A polymerisation catalyst which comprises

A) a treated and washed solid product produced by a process as claimed in any one of claims 1 to 11; and

B) an organic compound of aluminium or of a non-transition metal of Group IIA of the Periodic Table, or a complex of an organic compound of a non-transition metal of Group IA or IIA of the Periodic Table together with an organic aluminium compound.

13. A process for the production of a polymer or copolymer of an unsaturated monomer wherein at least one unsaturated hydrocarbon monomer is contacted under polymerisation conditions with a polymerisation catalyst as claimed in claim 12.

European Patent Office

**EUROPEAN SEARCH REPORT**

0131359
Application number

EP 84 30 3408

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | CHEMICAL ABSTRACTS, vol. 92, no. 6, February 1980, page 19, no. 42631m, Columbus, Ohio, US; & JP - A - 79 135 689 (TOA NENRYO KOGYO K.K.) 22-10-1979 * abstract * --- | 1,3,5-7 | C 08 F 10/00<br>C 08 F 4/62 |
| X | FR-A-2 367 081 (MITSUI) * whole document * --- | 1,3,5-7 | |
| X | FR-A-2 421 915 (MITSUI) * whole document * --- | 1,3,5-7 | |
| X | CHEMICAL ABSTRACTS, vol. 90, no. 22, May 1979, page 25, no. 169322a, Columbus, Ohio, US; & JP - A - 79 03 894 (MITSUBISHI PETROCHEMICAL CO., LTD.) 12-01-1979 * abstract * --- | 1,3,5-7 | TECHNICAL FIELDS SEARCHED (Int. Cl. 3)<br>C 08 F |
| P,X | EP-A-0 085 231 (ICI) * whole document * --- | 1,3,5-7 | |
| P,X | EP-A-0 113 960 (ICI) * whole document * ----- | 1,3,5-7 | |

The present search report has been drawn up for all claims

| Place of search | Date of completion of the search | Examiner |
|---|---|---|
| THE HAGUE | 26-09-1984 | WEBER H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document